# EUROPEAN PATENT APPLICATION

(11) **EP 4 814 890 A1**
(43) Date of publication of application: **30.09.2026**
(21) Application number: 26164480.1
(22) Date of filing: 13.03.2026
(51) Int. Cl.: G06V 10/764, G06V 10/82

(54) **CLASSIFICATION DEVICE, CLASSIFICATION METHOD, AND PROGRAM**

(30) Priority: 24.03.2025 JP 2025047963
(71) Applicant: CASIO COMPUTER CO., LTD., Shibuya-ku, Tokyo 151-8543 (JP)
(72) Inventor: NAKAJIMA, Mitsuyasu, Tokyo, 205-8555 (JP); TESHIMA, Yoshihiro, Tokyo, 205-8555 (JP)
(74) Representative: Plougmann Vingtoft a/s

(57) **Abstract**

A classification device (100) includes one or more processors (11) configured to classify, using an inference model, a classification target in an input image. The inference model is a model trained through machine learning using a training image. The training image is an image obtained by replacing pixel values of selected pixels within a region of a training target in an original image with values independent of pixel values of pixels within the region of the training target.

## Description

The present disclosure relates to a classification device, a classification method, and a program.

In recent years, image diagnosis technology using machine learning has been under study. For example, Japanese Patent No. 7307166 discloses a technique for generating variation training images in which pixel values of pixels belonging to disease regions in training images are varied within a range of possible pixel values, in order to prepare diverse training images in machine learning and thereby improve classification accuracy.

In image diagnosis using machine learning as described above, a target image may include foreign matter such as dust, dirt, scratches, bleeding, or the like. In such cases, the technique disclosed in Japanese Patent No. 7307166 has difficulty in sufficiently improving inference accuracy.

The present disclosure is made in view of the above-described circumstances, and an objective of the present disclosure is to improve inference accuracy in image diagnosis using machine learning.

A classification device according to the present disclosure includes:
one or more processors configured to classify, using an inference model, a classification target in an input image, wherein
the inference model is a model trained through machine learning using a training image, the training image being an image obtained by replacing pixel values of selected pixels within a region of a training target in an original image with values independent of pixel values of pixels within the region of the training target.

The present disclosure can improve inference accuracy in image diagnosis using machine learning.

A more complete understanding of this application can be obtained when the following detailed description is considered in conjunction with the following drawings, in which:
FIG. 1 is a block diagram illustrating a configuration of a classification device according to an embodiment;
FIG. 2 illustrates a configuration of original image data for a region extractor according to the embodiment;
FIG. 3 illustrates an example of original images according to the embodiment;
FIG. 4 illustrates a first example of training images according to the embodiment;
FIG. 5 illustrates a second example of training images according to the embodiment;
FIG. 6 illustrates a configuration of training data for the region extractor according to the embodiment;
FIG. 7 illustrates a flow of data in training of the region extractor according to the embodiment;
FIG. 8 is a flowchart illustrating a flow of a method for generating the region extractor according to the embodiment;
FIG. 9 illustrates a configuration of original image data for a classifier according to the embodiment;
FIG. 10 illustrates a configuration of training data for the classifier according to the embodiment;
FIG. 11 illustrates a configuration of the classifier according to the embodiment;
FIG. 12 illustrates a flow of data in training of the classifier according to the embodiment;
FIG. 13 is a flowchart illustrating a flow of a method for generating the classifier according to the embodiment;
FIG. 14 is a flowchart illustrating a flow of a classification method according to the embodiment;
FIG. 15 illustrates evaluation results of the performance of the classifier according to the embodiment; and
FIG. 16 illustrates an example of training images according to a modified example.

Hereinafter, an embodiment of the present disclosure is described with reference to the drawings. In the drawings, the same or corresponding portions are assigned the same reference sign. A classification device 100 according to the embodiment is a device that classifies, using a classifier 30 generated through machine learning, a classification target captured in an input image. In particular, the classification device 100 according to the embodiment is a medical diagnosis assisting device that classifies, for a medical image in which a lesion candidate serving as the classification target is captured, whether the lesion candidate is benign or malignant. The classification device 100 is implemented by an information processing device, such as a personal computer or a cloud server. The classification device 100 according to the embodiment includes a training image generation device, a region extractor generation device, and a classifier generation device according to the embodiment.

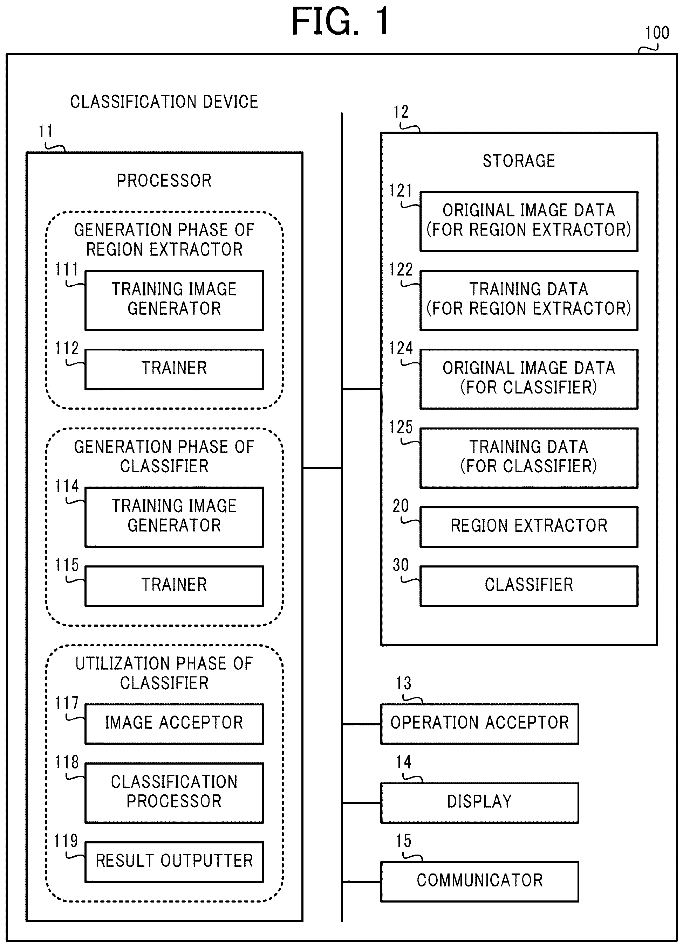

As illustrated in FIG. 1, the classification device 100 includes a processor 11, a storage 12, an operation accepter 13, a display 14, and a communicator 15. The processor 11 includes a central processing unit (CPU), a read only memory (ROM), and a random access memory (RAM). The CPU includes a microprocessor and the like, and is a central operation processor that executes various types of processing and operation. In the processor 11, the CPU retrieves a control program stored in the ROM and, using the RAM as a work memory, controls the overall operation of the classification device 100. Processing in the processor 11 may be executed by one CPU or executed by a plurality of CPUs.

The storage 12 is a nonvolatile memory, such as a flash memory or a hard disk. The storage 12 stores a program to be executed by the processor 11 and data generated by the processor 11. Specifically, the storage 12 stores original image data 121 and 124, training data 122 and 125, a region extractor 20, and the classifier 30, which are described in detail later. The operation accepter 13 includes an input device, such as a keyboard, a mouse, or a touch panel, and accepts operation input from a user. The display 14 includes a display device, such as a liquid crystal display or an organic electro luminescence (EL) display, and displays various types of images under the control of the processor 11.

The communicator 15 includes a communication interface to communicate with a device external to the classification device 100. For example, the communicator 15 communicates with an external device in accordance with well-known communication standards, such as the Internet, a local area network (LAN), and a universal serial bus (USB). The communicator 15 is communicably connected to a non-illustrated camera, and acquires an input image captured by the camera through communication. In one example, the camera is a dermoscope camera capable of capturing a lesion candidate on the skin. The communicator 15 acquires, as the input image, a dermoscopy image captured by the dermoscope camera. The input image is not limited to a dermoscopy image, and may be another type of image that allows a lesion candidate to be captured, such as an endoscopic image, an X-ray image, a computed tomography (CT) image, or an ultrasonic image.

The processor 11 executes three phases of processing, namely a first phase that is a generation phase of the region extractor 20, a second phase that is a generation phase of the classifier 30, and a third phase that is a utilization phase of the classifier 30. First, the processor 11 includes, as functions in the generation phase of the region extractor 20, a training image generator 111 and a trainer 112. Second, the processor 11 includes, as functions in the generation phase of the classifier 30, a training image generator 114 and a trainer 115. Third, the processor 11 includes, as functions in the utilization phase of the classifier 30, an image accepter 117, a classification processor 118, and a result outputter 119. In the processor 11, the CPU functions as the above-described functional components by retrieving programs stored in the ROM into the RAM and executing the programs to perform control. In the processor 11, one CPU may function as the functional components in each phase, or a plurality of CPUs may function as the functional components in each phase in cooperation with one another.

First, the generation phase of the region extractor 20 is described. The generation phase of the region extractor 20 is a phase in which the region extractor 20 is generated through machine learning. Here, the region extractor 20 is a computer program for extracting a region of an extraction target from an input image. In other words, the region extractor 20 is a trained model that is generated through machine learning, and is one of inference models that infer information on an inference target (a region of an extraction target) from an input image including the inference target (the extraction target).

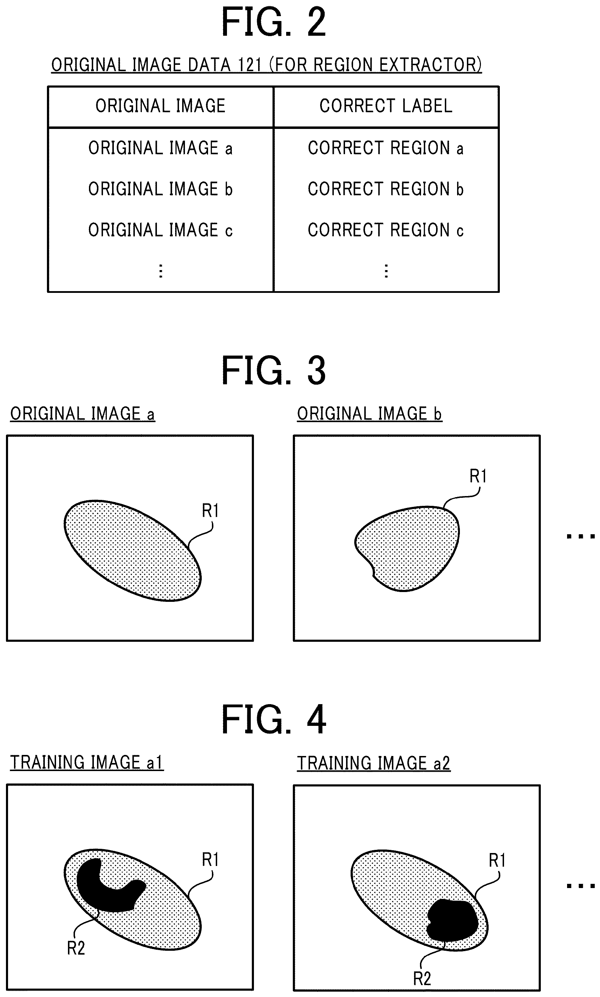

The training image generator 111 generates, using the original image data 121, the training data 122 for the region extractor 20. The training data 122 is a training dataset for use in machine learning of the region extractor 20. As illustrated in FIG. 2, the original image data 121 includes a plurality of original images a, b, c, ... and information on a plurality of correct regions a, b, c, ... that serve as correct labels. Each of the plurality of original images a, b, c, ... is an image in which a lesion candidate serving as the training target is captured. In one example, as illustrated in FIG. 3, each of the plurality of original images a, b, c, ... (only an example of the original images a and b is illustrated in FIG. 3) is an image in which a different lesion candidate is captured.

Here, the lesion candidate refers to a site in a body of a subject where a pathological change may have occurred, in other words, a site in a body of a subject where some disease, such as a tumor, may have occurred. Examples of the lesion candidate include sites having distinctive features on the skin, such as moles, birthmarks, and spots. The lesion candidate may be any site where a pathological change may have occurred, and may be a site where a pathological change has actually occurred, or a site where a pathological change is determined, as a result of detailed diagnosis, not to have occurred.

Returning to FIG. 2, each of the correct labels is information indicating a correct answer for information inferred by the inference model. Specifically, each of the correct labels in the original image data 121 is information indicating a correct answer for an extraction result obtained by the region extractor 20. Here, the correct answer for the extraction result correspond to a region of a lesion candidate in an image. Specifically, the original image data 121 defines the correct regions a, b, c, ... as the correct labels for the original images a, b, c, .... The correct regions a, b, c, ... are regions of lesion candidates in the original images a, b, c, ..., respectively. Specifically, as illustrated in FIG. 3, each of the correct regions a, b, c, ...corresponds to a lesion region R1 that is a region in which a lesion candidate is present in the corresponding original image a, b, c, ....

More specifically, each of the correct regions a, b, c, ... is represented by an array in which each pixel within the lesion region R1 in the corresponding original image a, b, c, ... has a pixel value of 255, and each pixel outside the lesion region R1 has a pixel value of 0. The original image data 121 is data in which the above-described correct regions a, b, c, ... are associated with the original images a, b, c, ..., respectively. In other words, the original image data 121 defines a plurality of pairs of original images and corresponding correct labels, such as a pair of the original image a and the correct region a, a pair of the original image b and the correct region b, a pair of the original image c and the correct region c, and the like. An operator previously prepares the above-described original images a, b, c, ... for which the correct regions a, b, c, ... are known, generates the original image data 121 in which the original images a, b, c, ... are respectively paired with the correct regions a, b, c, ..., and stores the original image data 121 in the storage 12.

The training image generator 111 generates training images for the region extractor 20 based on the original images included in the original image data 121. Here, each of the training images is a replaced image obtained by replacing pixel values of selected pixels within the lesion region R1 in each of the original images. The training images are generated to increase the number of images in order to improve accuracy of inference (extraction of regions of lesion candidates) performed by the region extractor 20. First, the training image generator 111 refers to the correct region in the original image data 121 to identify, in the original image, the lesion region R1 in which a lesion candidate is captured. Next, the training image generator 111 replaces pixel values of selected pixels within the identified lesion region R1 with values independent of the lesion candidate in the identified lesion region R1.

Here, the values independent of the lesion candidate refer to values determined without depending on features of the lesion candidate, such as color, size, shape, and the like. In other words, the values independent of the lesion candidate are values determined irrespective of the features of the lesion candidate in the image, and determined without reference to pixel values of any pixels within the lesion region R1. The values independent of the lesion candidate may also be referred to as values unrelated to the lesion candidate or values not based on the lesion candidate. As the values independent of the lesion candidate, for example, specific values unrelated to pixel values of any pixels within the lesion region R1, such as black (pixel value = 0) and white (pixel value = 255), may be used. In the following description, a case is described as an example in which the training image generator 111 replaces pixel values of selected pixels within the lesion region R1 with black (pixel value = 0).

Specifically, the training image generator 111 generates training images a1, a2, ... illustrated in FIG. 4 based on the original image a illustrated in FIG. 3. Each of the training images a1, a2, ... is an image in which pixel values of pixels included in a replacement range R2, which is a partial range of the lesion region R1 in the original image a, are replaced with 0, that is, an image in which the replacement range R2 is filled in black. The training image generator 111 randomly determines the replacement range R2 from within the lesion region R1 in the original image a, and uniformly replaces pixel values of all pixels within the determined replacement range R2 with black (0). As a result, the training image generator 111 generates the training images a1, a2, ... in which an image of a lesion candidate in the replacement range R2 in the original image a is concealed by pixel values unrelated to features of the lesion candidate. The training image generator 111 repeatedly executes the above-described replacement processing while changing the replacement range R2. As a result, the training image generator 111 generates, based on one original image a, each of the plurality of training images a1, a2, ... in which a different replacement range R2 is filled in black.

The reason for replacing pixel values of selected pixels within the lesion region R1 with black as described above is to simulate the presence of foreign matter, such as dust, dirt, scratches, bleeding, or the like, at the position of the lesion candidate on the skin. Specifically, since the skin is exposed to the outside environment, lesion candidates that occur on the skin exhibit diverse features and are affected by various kinds of foreign matter, such as dust, dirt, scratches, bleeding, and the like. When foreign matter is present on a lesion candidate, a portion of the lesion candidate is concealed by the foreign matter and changes in appearance. This is a cause of deterioration in inference accuracy of the inference model. In view of such circumstances, in order to generate the inference model (the region extractor 20) capable of performing inference (region extraction) with high accuracy even when foreign matter is present on a lesion candidate, the training image generator 111 fills a portion of the lesion region R1 with black. As a result, the training image generator 111 generates each of the training images a1, a2, ... that simulates a state in which foreign matter is present on a lesion candidate.

The training image generator 111 randomly determines, within the lesion region R1, the replacement range R2 in which pixel values are replaced. In other words, the training image generator 111 determines the replacement range R2 irrespective of features of a lesion candidate, such as color, size, shape, and the like, that is, without depending on the lesion candidate in the lesion region R1. Specifically, the training image generator 111 randomly determines the size, position, and shape of the replacement range R2 within the lesion region R1. The replacement range R2 may have any size such that the replacement range R2 is a partial range of the lesion region R1. The replacement range R2 may be at any position within the lesion region R1. The replacement range R2 may have a geometric shape or an irregular shape. By randomly determining the replacement range R2 as described above, the training image generator 111 generates, based on one original image a, each of the plurality of training images a1, a2, ... in which pixel values of all pixels within a different replacement range R2 is replaced. Although it is difficult to predict the position of actual foreign matter on a lesion candidate, by randomly determining the replacement range R2 as described above, training images corresponding to situations in which foreign matter is present at any position can be obtained.

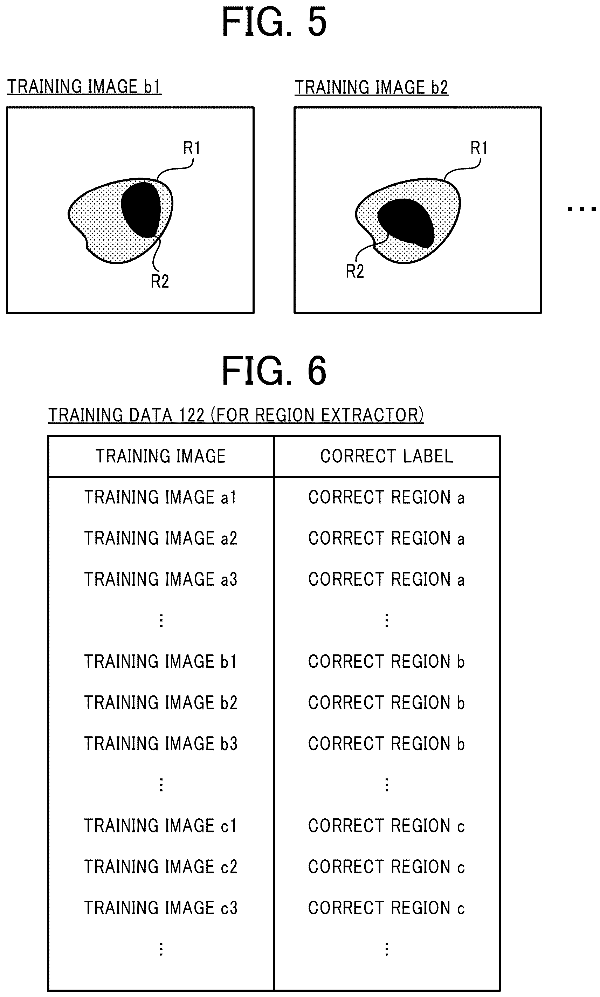

In addition to generating the training images a1, a2, ... based on the original image a as described above, the training image generator 111 generates training images b1, b2, ... illustrated in FIG. 5 based on the original image b illustrated in FIG. 3. As with each of the training images a1, a2, ..., each of the training images b1, b2, ... is an image in which pixel values of pixels included in the replacement range R2, which is a partial range of the lesion region R1, are replaced with 0 that is a value independent of pixel values of any pixels within the lesion region R1. Although illustration is omitted, the training image generator 111 generates training images for each of the original images other than the original images a and b in the same manner. As described above, for each of the original images a, b, c, ... included in the original image data 121, the training image generator 111 generates, based on one original image, each of a plurality of training images in which pixel values of all pixels within the replacement range R2 determined randomly are replaced. As a result, the training image generator 111 increases the number of training images in the training data 122, and generates diverse training images.

Upon generation of the training images, the training image generator 111 associates the generated training images with a correct label that indicates the lesion region R1 in the generated training images. As a result, the training image generator 111 generates the training data 122 for the region extractor 20. Specifically, as illustrated in FIG. 6, the training image generator 111 associates each of the training images a1, a2, a3, ... generated based on the original image a with the correct region a that is associated with the original image a in the original image data 121. The training image generator 111 also associates each of the training images b1, b2, b3, ... generated based on the original image b with the correct region b that is associated with the original image b in the original image data 121. As described above, the training image generator 111 generates the training data 122 in which each of the training images is paired with the correct region that is associated with the original image from which the training images have been generated.

Returning to FIG. 1, the trainer 112 performs machine learning using the training data 122 generated by the training image generator 111, and generates the region extractor 20. The region extractor 20 accepts an input image in which a lesion candidate serving as an extraction target is captured, infers and extracts a region of the lesion candidate in the input image, and outputs output information indicating the extracted region. The region extractor 20 may include any configuration for inferring a region of a lesion candidate from an input image. In one example, the region extractor 20 includes a U-Net architecture that is a type of convolutional neural network (CNN) for image segmentation.

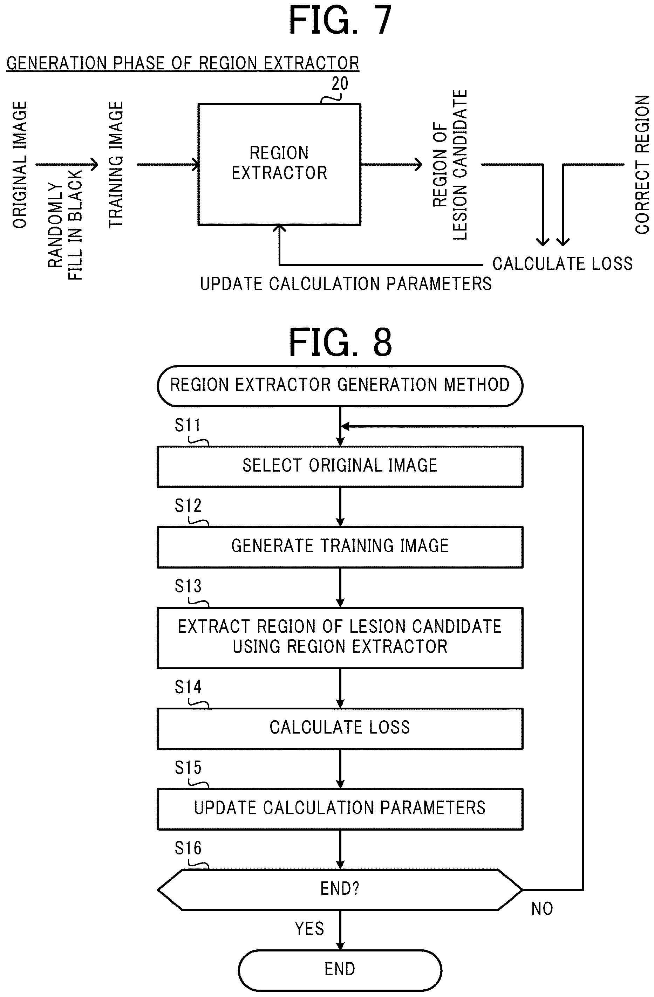

The trainer 112 performs machine learning using the plurality of training images included in the training data 122 as teacher data, and learns calculation parameters of the region extractor 20. Specifically, as illustrated in FIG. 7, the trainer 112 inputs each of the plurality of training images included in the training data 122 to the region extractor 20. The region extractor 20 infers and extracts a region of a lesion candidate in the input training image, and outputs output information indicating the extracted region. The trainer 112 adjusts the calculation parameters of the region extractor 20, using an error back-propagation method or the like, such that the region extracted by the region extractor 20 comes close to a correct region that is associated with the input training image in the training data 122. The calculation parameters of the region extractor 20 are, for example, weights of connections between layers in the neural network.

More specifically, the trainer 112 calculates a loss between the region extracted by the region extractor 20 and the correct region. In one example, the trainer 112 evaluates, using an intersection over union (IoU) loss, a degree of overlap between the region extracted by the region extractor 20 and the correct region. The trainer 112 adjusts the calculation parameters of the region extractor 20 so as to reduce the calculated loss. By adjusting the calculation parameters, the region extracted from the input training image by the region extractor 20 changes. The trainer 112 adjusts the calculation parameters by variously changing the calculation parameters such that the region extracted by the region extractor 20 comes as close as possible to the correct region. The trainer 112 optimizes the calculation parameters of the region extractor 20 by executing the above-described adjustment processing of the calculation parameters for each of the plurality of training images included in the training data 122, and thereby constructs the neural network in the region extractor 20.

By adjusting the calculation parameters as described above, the trainer 112 generates the region extractor 20 capable of inferring and extracting a region of a lesion candidate with high accuracy from an input image in which the lesion candidate is captured. The above-described region extractor 20 is generated through machine learning using the training data 122 that includes the training images a1, a2, ..., b1, b2, ... each obtained by replacing pixel values of selected pixels within the lesion region R1 in each of the original images a, b, c, ... with values independent of the lesion candidate. Therefore, even when foreign matter is present on a lesion candidate, the region extractor 20 capable of extracting a region of the lesion candidate with high accuracy can be obtained.

Next, with reference to FIG. 8, a flow of a region extractor generation method to be executed in the generation phase of the region extractor 20 is described. The region extractor generation method illustrated in FIG. 8 starts upon acceptance by the operation accepter 13 of a start instruction from a user while the original image data 121 for the region extractor 20 is prestored in the storage 12.

Upon start of the region extractor generation method, the processor 11 selects one original image from the plurality of original images a, b, c, ... included in the original image data 121 (step S11). Upon selection of the original image, the processor 11 generates a training image based on the selected image (step S12). Specifically, the processor 11 randomly determines the replacement range R2 from within the lesion region R1 in the selected original image, and replaces pixel values of all pixels within the determined replacement range R2 with black (0). For example, in a case where the original image a is selected in step S11, the processor 11 generates the training images a1, a2, ... illustrated in FIG. 4. In a case where the original image b is selected in step S11, the processor 11 generates the training images b1, b2, ... illustrated in FIG. 5. Steps S11 and S12 are examples of a training image generation method according to the embodiment.

Upon generation of the training image, the processor 11 inputs the generated training image to the region extractor 20, and extracts, using the region extractor 20, a region of a lesion candidate from the generated training image (step S13). Next, the processor 11 calculates a loss between the extracted region and the correct region (step S14). The processor 11 then updates the calculation parameters of the region extractor 20 so as to reduce the calculated loss (step S15). Upon update of the calculation parameters, the processor 11 determines whether to end the processing (step S16). In a case where any unselected original image remains among the plurality of original images a, b, c, ... included in the original image data 121, the processor 11 determines not to end the processing (No in step S16). In this case, the processor 11 returns the processing to step S11, and selects an unselected original image from the plurality of original images a, b, c, ... included in the original image data 121. The processor 11 then executes processing in steps S12 to S16 using the selected original image. As described above, the processor 11 repeats processing including generation of a training image based on each of the plurality of training images a, b, c, ... included in the original image data 121, and update of the calculation parameters of the region extractor 20. Upon completion of selection of all of the plurality of training images a, b, c, ... included in the original image data 121, the processor 11 finally determines to end the processing (Yes in step S16), and ends the region extractor generation method illustrated in FIG. 8.

Returning to FIG. 1, second, the generation phase of the classifier 30 is described. The generation phase of the classifier 30 is a phase in which the classifier 30 is generated through machine learning by utilizing the region extractor 20 generated as described above. Here, the classifier 30 is a computer program for classifying a classification target captured in an input image. In other words, the classifier 30 is a trained model that is generated through machine learning, and is one of inference models that infer information on an inference target (benignity or malignancy that is a type of a classification target) in an input image including the inference target (the classification target).

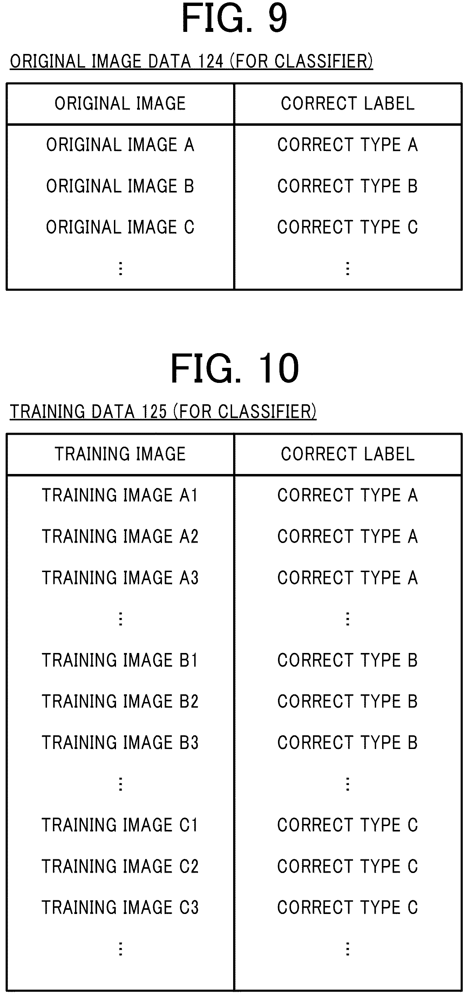

The training image generator 114 generates, using the original image data 124, the training data 25 for the region extractor 30. The training data 125 is a training dataset for use in machine learning of the classifier 30. As illustrated in FIG. 9, the original image data 124 includes a plurality of original images A, B, C, ... and information on a plurality of correct types A, B, C, ... that serve as correct labels. Each of the plurality of original images A, B, C, ... is an image in which a lesion candidate serving as a training target is captured. Specifically, as with each of the original images a, b, c, ... illustrated in FIG. 3, each of the original images A, B, C, ... is an image in which a different lesion candidate is captured. However, each of the original images a, b, c, ... in the original image data 121 for the region extractor 20 is an image in which a region of a candidate lesion is known, whereas each of the original images A, B, C, ... for the classifier 30 is an image in which a type of a lesion candidate is known but a region of the candidate lesion is unknown.

Each of the correct labels in the original image data 124 is information on classification of a lesion candidate, and is information indicating a correct answer for a classification result obtained by the classifier 30. Here, the correct answer for the classification result corresponds to information on a type of a lesion candidate in an image, more specifically, information indicating whether the lesion candidate is benign or malignant. Specifically, the original image data 124 defines the correct types A, B, C, ... as the correct labels for the original images A, B, C, .... Each of the correct types A, B, C, ... is information indicating whether a lesion candidate captured in each of the original images A, B, C, ... is benign or malignant.

More specifically, each of the correct types A, B, C, ... is represented by a binary value of 1 or 0, and is represented by 1 in a case where a lesion candidate is malignant, and represented by 0 in a case where the lesion candidate is benign. As the correct types A, B, C, ..., results of pathological diagnosis (biopsy) can be used. The original image data 124 is data in which the above-described correct types A, B, C, ... are associated with the original images A, B, C, ..., respectively. In other words, the original image data 124 defines a plurality of pairs of original images and corresponding correct labels, such as a pair of the original image A and the correct type A, a pair of the original image B and the correct type B, a pair of the original image C and the correct type C, and the like. An operator previously prepares the above-described original images A, B, C, ... for which the correct types A, B, C, ... are known, generates the original image data 124 in which the original images A, B, C, ... are respectively paired with the correct types A, B, C, ..., and stores the original image data 124 in the storage 12.

The original images A, B, C, ... in the original image data 124 for the classifier 30 may be the same as the original images a, b, c, ... in the original image data 121 for the region extractor 20, or may be different therefrom. In general, preparing a large number of correct regions a, b, c, ... tends to require more effort of an operator than preparing a large number of correct types A, B, C, .... Therefore, as the original images a, b, c, ... in the original image data 121, some of the original images A, B, C, ... in the original image data 124 may be used.

The training image generator 114 generates training images for the classifier 30 based on the original images included in the original image data 124. Here, as with each of the above-described training images for the region extractor 20, each of the training images for the classifier 30 is an image obtained by replacing pixel values of selected pixels within the lesion region R1 in each of the original images. The training images for the classifier 30 are generated to increase the number of images in order to improve accuracy of inference (classification of lesion candidates) performed by the classifier 30.

First, the training image generator 114 estimates, using the region extractor 20 generated by the trainer 112, the lesion region R1 in each of the original images A, B, C, .... Specifically, the training image generator 114 inputs each of the original images to the region extractor 20. The region extractor 20 infers and extracts a region of a lesion candidate in the input original image, and outputs output information indicating the extracted region. The training image generator 114 estimates the region extracted by the region extractor 20 as the lesion region R1. The training image generator 114 performs, for each of the original images A, B, C, ..., the above-described estimation processing of the lesion region R1 using the region extractor 20. As described above, the region extractor 20 is generated through machine learning using the training images a1, a2, ..., b1, b2, ... each obtained by replacing pixel values of selected pixels within the lesion region R1 in each of the original images a, b, c, ... with values independent of a lesion candidate. Therefore, even when foreign matter is present on the lesion region R1, the training image generator 114 can estimate the lesion region R1 in each of the original images A, B, C, ... with high accuracy.

Upon estimation of the lesion region R1, the training image generator 114 replaces pixel values of selected pixels within the estimated lesion region R1 with values independent of the lesion candidate in the estimated lesion region R1. Here, as described above, the values independent of the lesion candidate refer to values determined without reference to pixel values of any pixels within the lesion region R1, such as black (pixel value = 0) and white (pixel value = 255). In the following description, as described above, a case is described as an example in which the training image generator 114 replaces pixel values of selected pixels within the lesion region R1 with black (pixel value = 0). Subsequent replacement processing performed by the training image generator 114 for each of the original images A, B, C, ... is the same as the above-described replacement processing performed by the training image generator 111 for each of the original images a, b, c, ....

Specifically, the training image generator 114 randomly determines the replacement range R2 from within the lesion region R1 identified by using the region extractor 20, and uniformly replaces pixel values of all pixels within the determined replacement range R2 with black (0). In this determination, the training image generator 114 ramdomly determines at least one of the size, position, and shape of the replacement range R2. The training image generator 114 repeatedly performs the above-described replacement processing while changing the replacement range R2. As a result, the training image generator 114 generates training images A1, A2, A3, ... based on the original image A, and generates training images B1, B2, B3, ... based on the original image B. As described above, for each of the original images A, B, C, ... included in the original image data 124, the training image generator 114 generates, based on one original image, each of a plurality of training images in which the replacement range R2 determined randomly is filled in black. The training images for the classifier 30 generated by the training image generator 114 as described above are the same as the training images a1, a2, ..., b1, b2, ... for the region extractor 20 illustrated in FIGS. 4 and 5, and illustration thereof is thus omitted. However, since the replacement range R2 is determined randomly, pixels filled in black are different in each image.

Upon generation of the training images, the training image generator 114 associates each of the generated training images with a correct label that indicates whether a lesion candidate in the generated training image is benign or malignant. As a result, the training image generator 114 generates the training data 125 for the classifier 30. Specifically, as illustrated in FIG. 10, the training image generator 114 associates each of the training images A1, A2, A3, ... generated based on the original image data A with the correct type A that is associated with the original image A in the original image data 124. The training image generator 114 also associates each of the training images B1, B2, B3, ... generated based on the original image data B with the correct type B that is associated with the original image B in the original image data 124. As described above, the training image generator 114 generates the training data 125 in which each of the training images is paired with the correct type that is associated with the original image from which the training images have been generated.

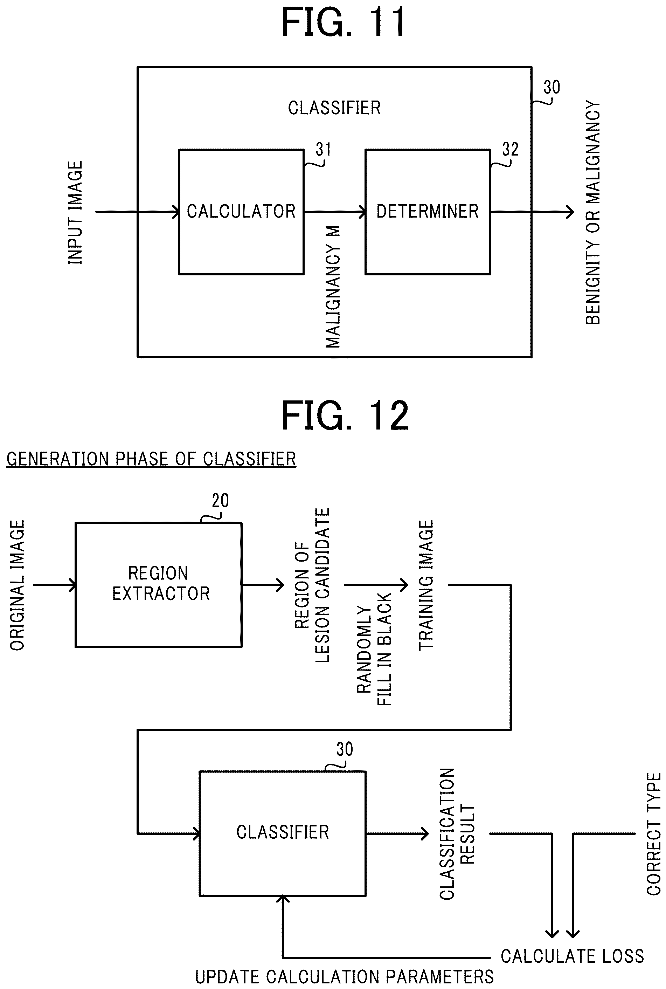

Returning to FIG. 1, the trainer 115 performs machine learning using the training data 125 generated by the training image generator 114, and generates the classifier 30. The classifier 30 accepts an input image in which a lesion candidate serving as a classification target is captured, infers and classifies a type of the lesion candidate in the input image, that is, whether the lesion candidate is benign or malignant, and outputs output information indicating the classification result. More specifically, as illustrated in FIG. 11, the classifier 30 includes a calculator 31 and a determiner 32.

The calculator 31 calculates a malignancy M of a lesion candidate captured in an input image. Here, the malignancy M is a value indicating a probability that the lesion candidate is malignant. The malignancy M has a value of 0 or more and 1 or less. The malignancy M closer to 0 indicates a higher probability that the lesion candidate is benign. The malignancy M closer to 1 indicates a higher probability that the lesion candidate is malignant. The calculator 31 may include any configuration for calculating the malignancy M of a lesion candidate based on an input image. In one example, the calculator 31 includes a configuration of a general deep learning model, such as a residual network (ResNet) that is a type of CNN for image recognition.

The determiner 32 determines, based on the malignancy M calculated by the calculator 31, whether a lesion candidate is benign or malignant. Specifically, the determiner 32 compares the malignancy M calculated by the calculator 31 with a predetermined cutoff value. In a case where the malignancy M is greater than the cutoff value, the determiner 32 determines that the lesion candidate is malignant, and outputs value "1" as the output information of the classifier 30. Meanwhile, in a case where the malignancy M is smaller than the cutoff value, the determiner 32 determines that the lesion candidate is benign, and outputs value "0" as the output information of the classifier 30. The cutoff value is predetermined to be an appropriate value between 0 and 1 so as to allow the determiner 32 to appropriately determine benignity and malignancy.

The trainer 115 performs machine learning using the plurality of training images included in the training data 125 as teacher data, and learns calculation parameters of the calculator 31 of the classifier 30. Specifically, as illustrated in FIG. 12, the trainer 115 inputs each of the plurality of training images included in the training data 125 to the classifier 30. In the classifier 30, the calculator 31 infers, calculates, and outputs the malignancy M of a lesion candidate in the input training image. The determiner 32 determines, based on the malignancy M calculated by the calculator 31, whether the lesion candidate is benign or malignant. The trainer 115 adjusts the calculation parameters of the calculator 31 using an error back-propagation method or the like such that the classification result obtained by the classifier 30 comes close to the correct type that is associated with the input training image in the training data 125. The calculation parameters of the calculator 31 are, for example, weights of connections between layers in the neural network.

More specifically, the trainer 115 calculates a loss between the classification result obtained by the classifier 30 and the correct type. In this calculation, the trainer 115 may calculate a loss between the malignancy M calculated by the calculator 31 and the correct type, or may calculates a loss between the value indicating benignity or malignancy (0 or 1) determined by the determiner 32 and the correct type. In one example, the trainer 115 can employ a loss function based on cross-entropy loss. The trainer 115 adjusts the calculation parameters of the calculator 31 so as to reduce the calculated loss. By adjusting the calculation parameters, the classification result of benignity or malignancy obtained by the classifier 30 for the input training image changes. The trainer 115 adjusts the calculation parameters by variously changing the calculation parameters such that the classification result obtained by the classifier 30 comes as close as possible to the correct type. The trainer 115 optimizes the calculation parameters of the classifier 30 by executing the above-described adjustment processing of the calculation parameters for each of the plurality of training images included in the training data 125, and thereby constructs the neural network in the classifier 30.

By adjusting the calculation parameters as described above, the trainer 115 generates the classifier 30 capable of classifying, with high accuracy, benignity or malignancy of a lesion candidate captured in an input image. The above-described classifier 30 is generated through machine learning using the training data 125 that includes the training images A1, A2, ..., B1, B2, ... each obtained by replacing pixel values of selected pixels within the lesion region R1 in each of the original images A, B, C, ... with values independent of the lesion candidate. Therefore, even when foreign matter is present on the lesion candidate, the classifier 30 capable of classifying the lesion candidate with high accuracy can be obtained.

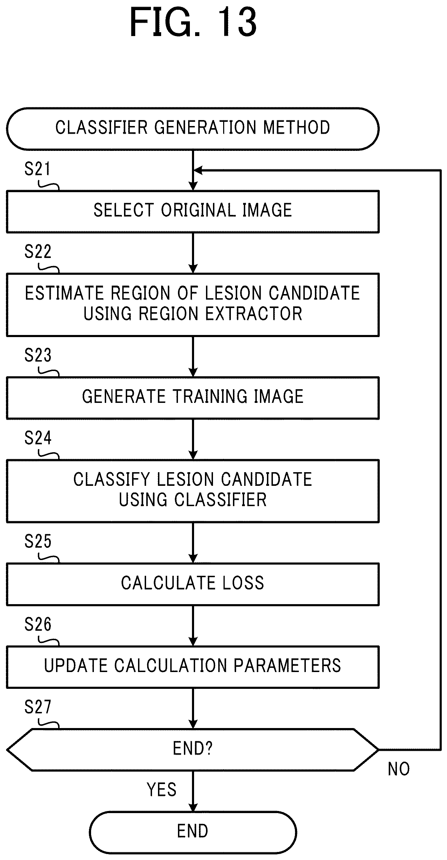

Next, with reference to FIG. 13, a flow of a classifier generation method to be executed in the generation phase of the classifier 30 is described. The classifier generation method illustrated in FIG. 13 starts upon acception by the operation accepter 13 of a start instruction from a user while the region extractor 20 generated through the region extractor generation method illustrated in FIG. 8 and the original image data 124 for the classifier 30 are prestored in the storage 12.

Upon start of the classifier generation method, the processor 11 selects one original image from the plurality of original images A, B, C, ... included in the original image data 124 (step S21). Upon selection of the original image, the processor 11 inputs the selected original image to the region extractor 20, and estimates, using the region extractor 20, a region of a lesion candidate in the selected original image (step S22). Upon estimation of the region of the lesion candidate by the region extractor 20, the processor 11 generates a training image based on the selected original image (step S23). Specifically, the processor 11 randomly determines the replacement range R2 from within the region estimated in step S22, and replaces pixel values of all pixels within the determined replacement range R2 with black (0). For example, in a case where the original image A is selected in step S21, the processor 11 generates the training images A1, A2, .... In a case where the original image B is selected in step S21, the processor 11 generates the training images B1, B2, .... Steps S21 to S23 are examples of the training image generation method according to the embodiment.

Upon generation of the training image, the processor 11 inputs the generated training image to the classifier 30, and classifies, using the classifier 30, the lesion candidate captured in the generated training image (step S24). Next, the processor 11 calculates a loss between the classification result and the correct type (step S25). The processor 11 then updates the calculation parameters of the calculator 31 of the classifier 30 so as to reduce the calculated loss (step S26). Upon update of the calculation parameters, the processor 11 determines whether to end the processing (step S27). In a case where any unselected original image remains among the plurality of original images A, B, C, ... included in the original image data 124, the processor 11 determines not to end the processing (No in step S27). In this case, the processor 11 returns the processing to step S21, and selects an unselected original image from the plurality of original images A, B, C, ... included in the original image data 124. The processor 11 then executes processing in steps S22 to S27 using the selected original image. As described above, the processor 11 repeats processing including generation of a training image based on each of the plurality of training images A, B, C, ... included in the original image data 124, and update of the calculation parameters of the calculator 31 of the classifier 30. Upon completion of selection of all of the plurality of training images A, B, C, ... included in the original image data 124, the processor 11 finally determines to end the processing (Yes in step S27), and ends the classifier generation method illustrated in FIG. 13.

Returning to FIG. 1, third, the utilization phase of the classifier 30 is described. The utilization phase of the classifier 30 is a phase in which whether an unknown lesion candidate in an unknown input image is benign or malignant is classified using the classifier 30 generated in the generation phase of the classifier 30. In the utilization phase of the classifier 30, the image accepter 117 accepts input of an unknown input image serving as a classification target. Here, the unknown input image refers to an image in which a lesion candidate with a type (benignity or malignancy) thereof unknown is captured. The image accepter 117 accepts, in accordance with an instruction from a user accepted by the operation accepter 13, a specification of an unknown input image serving as a classification target among the plurality of input images prestored in the storage 12. Alternatively, the image accepter 117 may accept an unknown input image serving as a classification target from the outside through the communicator 15. For example, the image accepter 117 may accept, through the communicator 15, a dermoscopy image captured by a camera as an input image.

The classification processor 118 classifies, using the classifier 30 generated by the trainer 115, benignity or malignancy of a lesion candidate serving as a classification target in an unknown input image accepted by the image accepter 117. Specifically, as illustrated in FIG. 11, the classification processor 118 inputs, to the classifier 30, the unknown input image accepted by the image accepter 117. In the classifier 30, the calculator 31 calculates, using the calculation parameters adjusted through machine learning performed by the trainer 115, the malignancy M of the lesion candidate captured in the unknown input image. The determiner 32 determines whether the lesion candidate is benign or malignant by comparing the malignancy M calculated by the calculator 31 with the cutoff value. The classifier 30 outputs, as the classification result, output information indicating benignity or malignancy determined by the determiner 32.

The classification processor 118 classifies, based on the above-described output information output by the classifier 30 for the unknown input image, a type of the lesion candidate captured in the input image, that is, whether the lesion candidate is benign or malignant. As described above, the classifier 30 is generated through machine learning using the training images A1, A2, ..., B1, B2, ... each obtained by replacing pixel values of selected pixels within the lesion region R1 in each of the original images A, B, C, ... with values independent of the lesion candidate. Therefore, even when foreign matter is present on a lesion candidate, the classification processor 118 can classify benignity or malignancy of the lesion candidate with high accuracy.

The result outputter 119 outputs a classification result obtained by the classification processor 118. Specifically, the result outputter 119 displays, on the display 14, output information indicating whether a lesion candidate in an unknown input image is benign or malignant, which is the classification result obtained by the classification processor 118. Alternatively, the result outputter 119 may output the output information by voice, or may output the output information to an external device via the communicator 15. As a result, a user can confirm the classification result obtained by the classification device 100. For example, in a case where the classification result output by the result outputter 119 indicates malignancy, the lesion candidate is to be subjected to a comprehensive diagnosis including a medical examination by a physician. As described above, the classification device 100 classifies, using the classifier 30, benignity or malignancy of a lesion candidate captured in an input image to assist diagnosis.

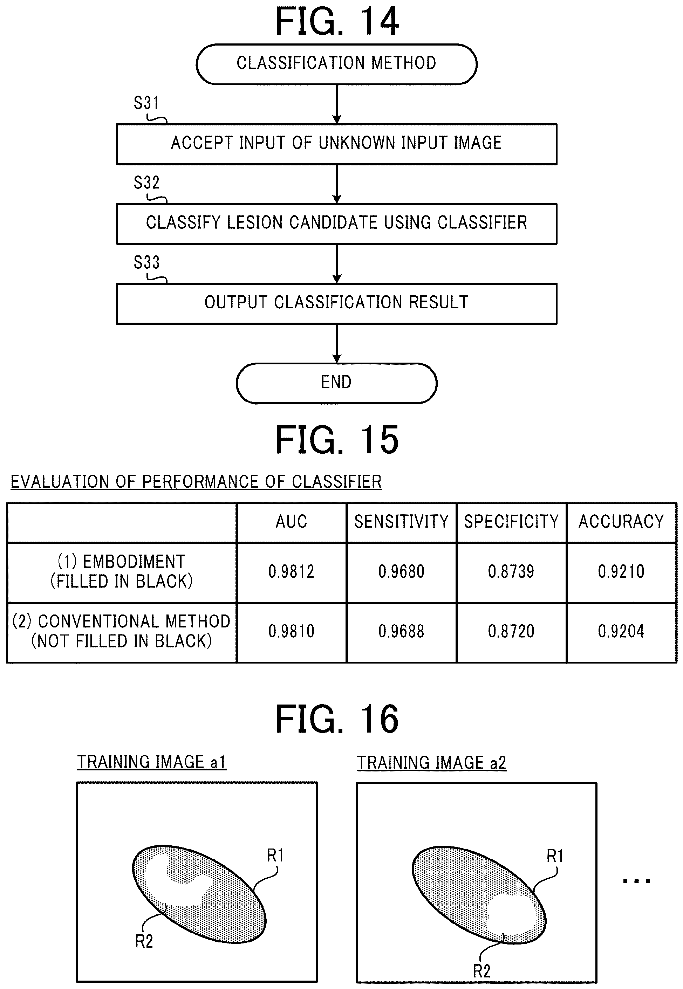

Next, with reference to FIG. 14, a flow of a classification method to be executed in the utilization phase of the classifier 30 is described. The classification method illustrated in FIG. 14 starts upon acceptance by the operation accepter 13 of a start instruction from a user while the classifier 30 generated through the classifier generation method illustrated in FIG. 13 is stored in the storage 12. Upon start of the classification processing, the processor 11 functions as the image accepter 117, and accepts input of an unknown input image in which an unknown lesion candidate serving as a classification target is captured (step S31). Next, the processor 11 functions as the classification processor 118, inputs the unknown input image to the classifier 30, and classifies, using the classifier 30, the lesion candidate captured in the input image (step S32). As a result, the processor 11 acquires a classification result indicating whether the lesion candidate captured in the input image is benign or malignant. The processor 11 then functions as the result outputter 119, and outputs output information indicating the acquired classification result (step S33). Consequently, the classification method illustrated in FIG. 14 ends.

In the above-described utilization phase of the classifier 30, the region extractor 20 is not utilized. However, the present disclosure is not limited thereto, and the classification processor 118 may estimate, using the region extractor 20, a region of a lesion candidate serving as a classification target in an input image before classifying the lesion candidate using the classifier 30 in step S32. As a result, the classification processing performed by the classifier 30 in step S32 can be limited to the region estimated by the region extractor 20, thereby improving processing speed and classification accuracy.

Next, results of evaluating the performance of the classifier 30 according to the above-described embodiment is described. In the performance evaluation, the classifier 30 was generated through each of (1) the method according to the embodiment and (2) a conventional method. Here, in the method according to the embodiment, as described above, the number of training images was increased by randomly filling in black a portion of the lesion region R1, and the classifier 30 was generated through machine learning using the training data 125 that was generated using the training images. In contrast, in the conventional method, the classifier 30 was generated through machine learning using the original image data 124 without filling the lesion region R1 in black. FIG. 15 illustrates results of evaluating the area under the ROC curve (AUC), sensitivity, specificity, and accuracy of the classifier 30 generated through the respective methods. In the method according to the embodiment, the performance of the classifier 30 was confirmed to be improved in terms of the AUC and accuracy, which are comprehensive evaluation indices, compared with the conventional method.

When considering the factors contributing to such evaluation results, although the lesion region R1 in each image contains features of a lesion candidate, these features are filled in black and thus concealed in the method according to the present embodiment. In this case, the classifier 30 cannot obtain information necessary for classifying the lesion candidate from the concealed portion, and thus analyzes information obtained from other portions of the lesion region R1. By randomly determining the position, size, and shape of such black-filled portion, no bias is introduced into classification performed by the classifier 30, thereby enabling more diverse learning. As a result, it is considered that, in the method according to the present embodiment, the performance of the classifier 30 is improved as compared with that of the conventional method.

As described above, the classification device 100 according to the embodiment generates training images each obtained by replacing pixel values of selected pixels within the lesion region R1 in each of the original images, in which a lesion candidate is captured, with values independent of the lesion candidate, and generates the training data 122 and 125 in which each of the generated training images is paired with the correct label. The classification device 100 according to the embodiment then generates an inference model through machine learning using the training data 122 and 125, and infers an inference target captured in an input image. As described above, by replacing pixel values of selected pixels within the lesion region R1 in each of the original images with values independent of the lesion candidate, the classification device 100 according to the embodiment generates the training images in which some of features of the lesion candidate are concealed by the replaced pixel values. Therefore, an inference model capable of performing inference with high accuracy even when foreign matter is present on a lesion candidate, in other words, a noise-robust inference model can be generated. As a result, inference accuracy in image diagnosis using machine learning can be improved. Specifically, in a case where the inference model is the region extractor 20, extraction accuracy for the lesion region R1 can be improved. In a case where the inference model is the classifier 30, classification accuracy for benignity or malignancy of a lesion candidate can be improved.

In particular, the skin is exposed to the outside environment, lesion candidates that occur on the skin change in appearance not only due to their diversity but also due to the influence of various kinds of foreign matter. In order to improve inference accuracy for such lesion candidates on the skin, general techniques for increasing the number of images, such as geometric transformations, have difficulty in addressing all possible states of the lesion candidates. In contrast, the classification device 100 according to the embodiment can increase the number of images using training images that simulate the presence of foreign matter at various positions on a lesion candidate, thereby improving inference accuracy for lesion candidates on the skin.

The above-described embodiment is merely an example and does not limit the scope of application of the present disclosure. That is, various applications of the embodiment of the present disclosure are possible, and all embodiments are included in the scope of the present disclosure. For example, in the above-described embodiment, in generation of the training images, the training image generators 111 and 114 uniformly replace pixel values of all pixels within the replacement range R2 with black (0). However, the replaced pixel values may be any color other than black having pixel values independent of a lesion candidate in the lesion region R1. For example, as the training images a1, a2, ... illustrated in FIG. 16, the training image generators 111 and 114 may uniformly replace pixel values of all pixels within the replacement range R2 with white (255) or other colors. Moreover, the training image generators 111 and 114 are not limited to uniformly replacing pixel values of all pixels within the replacement range R2 with the same value, and may replace the pixel values with different values for each pixel. For example, the training image generators 111 and 114 may randomly determine a replaced value for each pixel within the replacement range R2, and replace a pixel value of each pixel with the determined value.

In the above-described embodiment, the training image generators 111 and 114 randomly determine the size, position, and shape of the replacement range R2. However, the training image generators 111 and 114 may randomly determine at least one of the size, position, and shape of the replacement range R2. Moreover, in the above-described embodiment, the training image generators 111 and 114 determine one replacement range R2 within one lesion region R1. However, the training image generators 111 and 114 may determine a plurality of replacement ranges R2 within one lesion region R1. Alternatively, the training image generators 111 and 114 may randomly determine individual pixels for which pixel values are replaced, without determining a specific replacement range R2. As described above, the training image generators 111 and 114 may replace pixel values of any pixels within the lesion region R1, provided that a portion of an image of a lesion candidate captured in the lesion region R1 can be concealed and features of the lesion candidate in the image can be reduced. In addition to the replacement of pixel values of pixels within the replacement range R2 in the above-described embodiment, the training image generators 111 and 114 may increase the number of training images by geometric transformations, such as enlargement, reduction, rotation, and inversion, which are general techniques performed to increase the number of images.

Further, the replacement range R2 is not limited to being determined randomly. For example, the replacement range R2 may be a range obtained by inverting the replacement range R2 in a training image different from a newly generated training image. In other words, the training image generators 111 and 114 may determine, as the replacement range R2 in a new training image, a range having a shape obtained by inverting the shape of the replacement range R2 in another training image. Specifically, the training image generators 111 and 114 determine, as a new replacement range R2 within the lesion region R1, a range having a shape obtained by inverting the shape of the replacement range R2 in each of the training images a1, a2, ... illustrated in FIG. 4 in an arbitrary direction, such as a vertical direction or a horizontal direction. The training image generators 111 and 114 then generate, as a new training image, an image in which pixel values within the new replacement range R2 are replaced. The number of images may be increased by the above-described inversion of the replacement range R2. Moreover, the training image generators 111 and 114 are not limited to inverting the replacement range R2, and may determine, as a new replacement range R2, a range obtained by applying an arbitrary geometric transformation, such as enlargement, reduction, or rotation, to the replacement range R2.

In the above-described embodiment, the classification device 100 classifies benignity or malignancy of a lesion candidate. However, the classification device 100 is not limited thereto, and may be a device that classifies a referral recommendation of a classification target. Here, the referral recommendation refers to recommending a patient having a lesion candidate serving as a classification target to be referred to another hospital. For example, reference from a small-scale clinic to a large-scale hospital capable of performing more specialized examinations is assumed. In the above-described embodiment, in the training data 125, the correct label indicating whether a type of a lesion candidate is malignancy (1) or benignity (0) is associated with each of the training images. In contrast, in a case where the classification device 100 classifies the referral recommendation, a correct label indicating whether a type of a lesion candidate requires the referral recommendation (1) or does not require the referral recommendation (0) is associated with each of the training images. The trainer 115 performs machine learning using the above-described training data 125, and generates the classifier 30 that classifies whether the referral recommendation is required for a lesion candidate captured in an input image.

In the above-described embodiment, the classification device 100 is a medical diagnosis assisting device that accepts, as an input image, a medical image in which a lesion candidate is captured, and classifies whether the lesion candidate is benign or malignant. However, the classification device 100 is not limited to serving as a medical diagnosis assisting device. For example, the classification device 100 may be an inspection device that classifies whether there occurs an abnormality in a construction, such as a building, a road, or a bridge. In this case, the classifier 30 accepts, as an input image, an inspection image in which a construction, such as a building, a road, or a bridge, is captured. The classifier 30 then classifies, based on cracks, front surface shape, and the like of the construction captured in the inspection image, whether there occurs an abnormality in the construction. In this case, the classification target of the classifier 30 is not equivalent to a lesion candidate captured in a medical image, but a construction captured in an inspection image. The type of the classification target classified by the classifier 30 is not equivalent to benignity or malignancy of the lesion candidate, but presence or absence of an abnormality in the construction. Moreover, the classification device 100 is not limited to outputting, as a type of a classification target serving as a classification result, binary information as described above, such as benignity or malignancy of a lesion candidate, whether a referred diagnosis is required, or presence or absence of an abnormality in a construction, and may output information exceeding binary values as a classification result.

In the above-described embodiment, as illustrated in FIG. 1, the classification device 100 includes all of the functions of the generation phase of the region extractor 20, the generation phase of the classifier 30, and the utilization phase of the classifier 30. However, although illustration is omitted, the functions of the respective phases may be provided in separate devices. For example, there may be a classifier generation device that includes the functions of the generation phase of the region extractor 20 and the generation phase of the classifier 30, but does not include the functions of the utilization phase of the classifier 30. Moreover, there may be a classification device that includes only the functions of the utilization phase of the classifier 30 among the above-described three phases. In this case, the classification device classifies a lesion candidate using the classifier 30 generated by the classifier generation device. Alternatively, there may be a region extractor generation device that includes only the functions of the generation phase of the region extractor 20 among the above-described three phases, or a classifier generation device that includes only the functions of the generation phase of the classifier 30. Further, there may be a training image generation device for the region extractor 20 that includes the function of the training image generator 111 but does not include the function of the trainer 112, a training image generation device for the classifier 30 that includes the function of the training image generator 114 but does not include the function of the trainer 115, or a training image generation device that includes both the functions of the training image generators 111 and 114. As described above, the respective functions described in the above-described embodiment may be provided in separate devices, thereby enabling more flexible design and operation.

In the above-described embodiment, the processor 11 functions as the functional components illustrated in FIG. 1 by the CPU executing programs stored in the ROM or the storage 12. However, the processor 11 may be dedicated hardware. The dedicated hardware is, for example, a single circuit, a composite circuit, a programmed processor, an application specific integrated circuit (ASIC), a field-programmable gate array (FPGA), or a combination thereof. In a case where the processor 11 is dedicated hardware, the respective functions of the functional components may be implemented by separate pieces of hardware, or may be collectively implemented by a single piece of hardware. Moreover, a configuration may be employed in which some of the respective functions of the functional components are implemented by dedicated hardware, and the other functions are implemented by software or firmware. As described above, the processor 11 can implement the above-described functions by hardware, software, firmware, or a combination thereof.

By applying a program that defines the operation of the above-described classification device 100 to an existing computer, such as a personal computer or a cloud server, it is possible to cause the computer to function as the above-described classification device 100. Moreover, a method for distributing such a program is arbitrarily determined, and the program may be distributed stored in a non-transitory computer-readable recording medium, such as a compact disk ROM (CD-ROM), a digital versatile disk (DVD), a magneto optical disk (MO), or a memory card, or may be distributed via a communication network, such as the Internet. In addition, the above-described classification device 100 may be a system including a server and a device.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

## Claims

1. A classification device (100) comprising:
one or more processors (11) configured to classify, using an inference model, a classification target in an input image, wherein
the inference model is a model trained through machine learning using a training image, the training image being an image obtained by replacing pixel values of selected pixels within a region of a training target in an original image with values independent of pixel values of pixels within the region of the training target.

2. The classification device (100) according to claim 1, wherein
the inference model is a region extractor (20) or a classifier (30), and
in a case where the inference model is the region extractor (20), training is performed using training data (122) in which the training image is paired with a correct label indicating the region of the training target in the training image, while in a case where the inference model is the classifier (30), training is performed using training data (125) in which the training image is paired with a correct label related to classification of the training target.

3. The classification device (100) according to claim 1 or claim 2, wherein
the selected pixels are pixels within a partial range for which at least one of a size, a position, or a shape is randomly determined within the region of the training target.

4. The classification device (100) according to claim 1 or claim 2, wherein
the selected pixels are pixels within a partial range of the region of the training target, and
the partial range is a range obtained by inverting the partial range of a training image different from the training image.

5. A classification method comprising:
classifying, by one or more processors (11), using an inference model, a classification target in an input image, wherein
the inference model is a model trained through machine learning using a training image, the training image being an image obtained by replacing pixel values of selected pixels within a region of a training target in an original image with values independent of pixel values of pixels within the region of the training target.

6. A program causing a computer to execute processing comprising:
classifying, by one or more processors (11), using an inference model, a classification target in an input image, wherein
the inference model is a model trained through machine learning using a training image, the training image being an image obtained by replacing pixel values of selected pixels within a region of a training target in an original image with values independent of pixel values of pixels within the region of the training target.
